(19) Europäisches Patentamt
European Patent Office
Office européen des brevets

(11) **EP 4 521 514 A2**

(12) **EUROPÄISCHE PATENTANMELDUNG**

(43) Veröffentlichungstag:
   **12.03.2025 Patentblatt 2025/11**

(21) Anmeldenummer: **24199188.4**

(22) Anmeldetag: **09.09.2024**

(51) Internationale Patentklassifikation (IPC):
   *H01M 10/633* (2014.01)    *H01M 10/48* (2006.01)
   *B60L 58/26* (2019.01)    *H01M 10/613* (2014.01)
   *H01M 10/625* (2014.01)    *H01M 10/635* (2014.01)
   *H01M 10/6563* (2014.01)    *H01M 10/6568* (2014.01)

(52) Gemeinsame Patentklassifikation (CPC):
   H01M 10/613; B60L 58/26; H01M 10/486;
   H01M 10/625; H01M 10/633; H01M 10/635;
   H01M 10/6563; H01M 10/6568

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **GE KH MA MD TN**

(30) Priorität: **11.09.2023 DE 102023208773**

(71) Anmelder: **Siemens Mobility GmbH
   81739 München (DE)**

(72) Erfinder: **Brendel, Thomas
   40822 Mettmann (DE)**

(74) Vertreter: **Siemens Patent Attorneys
   Postfach 22 16 34
   80506 München (DE)**

(54) **VERFAHREN UND VORRICHTUNG ZUM TEMPERIEREN EINER BATTERIE**

(57)    Das erfindungsgemäße Verfahren zum Temperieren einer Batterie mithilfe eines Kühlmittelkreises, der mit einer passiven Kühleinrichtung und mit einer aktiven Kühleinrichtung derart gekoppelt ist, dass ein Kühlmittel in dem Kühlmittelkreis mittels der passiven Kühleinrichtung und/oder der aktiven Kühleinrichtung kühlbar ist, wobei die passive Kühleinrichtung ein Einstellmittel zum Ändern der Kühlleistung über einen einstellbaren Parameter umfasst, weist die folgenden Schritte auf:
- Erfassen von aktuellen Betriebsbedingungen, insbesondere einer Batterietemperatur, einer Kühlmittel-temperatur und einer Umgebungstemperatur,
- bei Erreichen einer ersten Batterietemperatur
i. Ermitteln einer ersten Energieeffizienz der passiven Kühleinrichtung bei einem ersten Parameterwert des einstellbaren Parameters bei den aktuellen Betriebsbedingungen,
ii. Vergleichen der ersten Energieeffizienz der passiven Kühleinrichtung mit einem Schwellwert,
iii. wenn die erste Energieeffizienz der passiven Kühleinrichtung größer ist als der Schwellwert, Betreiben der passiven Kühleinrichtung mit dem ersten Parameterwert,

- bei Erreichen einer Grenz-Batterietemperatur, die höher ist als die erste Batterietemperatur, Betreiben der aktiven Kühleinrichtung.

FIG 2

**Beschreibung**

Die Erfindung betrifft ein Verfahren zum Temperieren einer Batterie mithilfe eines Kühlmittelkreises, der mit einer passiven Kühleinrichtung und mit einer aktiven Kühleinrichtung gekoppelt ist. Die Erfindung betrifft ferner eine Vorrichtung zur Durchführung des Verfahrens, ein Fahrzeug umfassend zumindest eine solche Vorrichtung sowie eine Verwendung einer solchen Vorrichtung in einem Fahrzeug. Das Fahrzeug ist insbesondere als ein Schienenfahrzeug ausgestaltet.

In vielen Anwendungen müssen Akkumulatoren für eine optimierte Leistungsfähigkeit und Lebensdauer aktiv temperiert werden. Dies gilt insbesondere für Hochleistungs-Akkumulatoren, im Folgenden vereinfacht als Batterien oder Traktionsbatterien bezeichnet, mittels denen ein Fahrzeugantrieb sowie gegebenenfalls weitere elektrische Verbraucher eines Fahrzeugs versorgt werden. Für die Temperierung der Batterie bzw. Batterien werden mindestens ein Kühlmittelkreis sowie eine Heizung auf dem Fahrzeug installiert. Der Kühlmittelkreis ist in der Regel mit einer aktiven Kühleinrichtung (Kältemaschine) bzw. einem Kältemittelkreislauf gekoppelt. Gelegentlich sind Temperierungsvorrichtungen auch zusätzlich mit einer passiven Kühleinrichtung ausgestattet. Mit einer passiven Kühlung ist hier gemeint, dass die Abwärme der Batterie auf einen Kühler übertragen wird, welcher beispielsweise als ein Wasser/Luft-Wärmetauscher die Wärme durch eine treibende Temperaturdifferenz an die Umgebungsluft abgibt. Die passive Kühleinrichtung kann in beliebiger Weise mit dem Kühlmittelkreis der Batterie gekoppelt sein und umfasst in der Regel einen Lüfter, um ein Durchströmen des Kühlers von der Umgebungsluft zu forcieren.

Der Bedarf an elektrischer Energie für die Batterietemperierung wird von der Batterie selbst bereitgestellt, so dass diese schneller entladen wird, sofern in der aktuellen Betriebssituation keine andere, insbesondere externe, Energieversorgung zur Verfügung steht, die diesen Bedarf decken kann. Dies verringert die Reichweite des Fahrzeuges. Die Batterietemperierung und insbesondere die Batteriekühlung muss daher möglichst energieeffizient erfolgen.

Zu diesem Zweck werden auf Schienenfahrzeugen eigenständige, baulich von der Batterie getrennte so genannte Batterietemperierungssysteme (Englisch: Battery Thermal Management Systems, abgekürzt BTMS) installiert. Ein BTMS kann aktive und passive Kühleinrichtungen und eine zugehörige Steuerung umfassen. Der thermische Austausch mit der Batterie erfolgt über ein Kühlmittel in Form eines zirkulierenden flüssigen Wärmeträgers in dem Kühlmittelkreis. Das Kühlmittel wird vom BTMS gekühlt oder beheizt und mittels einer Kühlmittelpumpe in dem Kühlmittelkreis gefördert. Das Kühlmittel fließt dabei durch die Batterie und temperiert diese.

In anderen Einsatzgebieten von Batterien können einfachere Systeme zur Batterietemperierung verwendet werden, insbesondere kann beispielsweise eine Heizung nicht notwendig sein.

Das BTMS eines Fahrzeugs kann die Kühlmitteltemperatur direkt messen, weshalb diese üblicherweise als Regelgröße herangezogen wird. Das BTMS regelt dabei die Kühlmitteltemperatur in jeder Betriebssituation auf einen Wert innerhalb eines festgelegten Bereichs.

Diese Art der Regelung hat dabei den Nachteil, dass die Kühlmitteltemperatur und nicht die Batterietemperatur geregelt wird. Da es zwischen Kühlmittel und Batterie bzw. den Batteriezellen Wärmewiderstände gibt, kann die Batterietemperatur signifikant von der Kühlmitteltemperatur abweichen. Das eigentliche Ziel, die Batteriezellen in einem engen Temperaturbereich zu halten, wird daher nur unvollständig erreicht. Weiterhin muss, um die Kühlmitteltemperatur ausreichend genau erfassen zu können, das Kühlmittel ununterbrochen in dem Kühlmittelkreis zirkulieren. Geschieht dies nicht, wird eine verstärkte Wärmeabgabe innerhalb der Batterie nicht erkannt, da die Kühlmitteltemperatur nicht in der Nähe aller Batteriezellen gemessen wird. Der permanente Betrieb der Kühlmittelpumpe verursacht nachteilig zusätzlichen Energiebedarf und verkürzt die Lebensdauer der Pumpe. Ferner ist bei einem BTMS mit aktiver und passiver Kühleinrichtung dieses in der Regel vorgesehen, die passive Kühleinrichtung zu betreiben, wenn eine vordefinierte treibende Temperaturdifferenz zwischen Kühlmitteltemperatur und Umgebungstemperatur erreicht ist. Dies erfolgt unabhängig davon, ob die aktive Kühleinrichtung betrieben wird oder nicht. Dies verursacht nachteilig ebenfalls einen zusätzlichen Energieverbrauch und damit eine verringerte Reichweite des Fahrzeugs.

Aufgabe der Erfindung ist es, ein verbessertes Verfahren zum Temperieren einer Batterie anzugeben, das insbesondere eine zuverlässige Kühlung der Batterie gewährleistet und gleichzeitig einen geringen Energiebedarf aufweist.

Diese Aufgabe wird gelöst durch ein Verfahren sowie eine Vorrichtung mit den jeweiligen Merkmalen der unabhängigen Patentansprüche. Vorteilhafte Ausgestaltungen der Erfindung sind in abhängigen Patentansprüchen angegeben.

Das erfindungsgemäße Verfahren zum Temperieren einer Batterie mithilfe eines Kühlmittelkreises, der mit einer passiven Kühleinrichtung und mit einer aktiven Kühleinrichtung derart gekoppelt ist, dass ein Kühlmittel in dem Kühlmittelkreis mittels der passiven Kühleinrichtung und/oder der aktiven Kühleinrichtung kühlbar ist, wobei die passive Kühleinrichtung ein Einstellmittel zum Ändern der Kühlleistung über einen einstellbaren Parameter umfasst, weist die folgenden Schritte auf:

- Erfassen von aktuellen Betriebsbedingungen, insbesondere einer Batterietemperatur, einer Kühlmittel-temperatur und einer Umgebungstemperatur,
- bei Erreichen einer ersten Batterietemperatur

i. Ermitteln einer ersten Energieeffizienz der passiven Kühleinrichtung bei einem ersten Parameterwert des einstellbaren Parameters bei den aktuellen Betriebsbedingungen,
ii. Vergleichen der ersten Energieeffizienz der passiven Kühleinrichtung mit einem Schwellwert,
iii. wenn die erste Energieeffizienz der passiven Kühleinrichtung größer ist als der Schwellwert, Betreiben der passiven Kühleinrichtung mit dem ersten Parameterwert,

- bei Erreichen einer Grenz-Batterietemperatur, die höher ist als die erste Batterietemperatur, Betreiben der aktiven Kühleinrichtung.

Die erfindungsgemäße Vorrichtung, ausgestaltet zur Durchführung des erfindungsgemäßen Verfahrens, umfasst zumindest:

- einen Kühlmittelkreis zum Temperieren einer Batterie, wobei der Kühlmittelkreis mit einer passiven Kühleinrichtung und mit einer aktiven Kühleinrichtung derart gekoppelt ist, dass die passive Kühleinrichtung und die aktive Kühleinrichtung alternativ oder gemeinsam ein Kühlmittel in dem Kühlmittelkreis kühlen können, wobei die passive Kühleinrichtung ein Einstellmittel zum Ändern der Kühlleistung der passiven Kühleinrichtung über einen einstellbaren Parameter umfasst,
- Temperatursensoren für eine Batterietemperatur, eine Kühlmitteltemperatur und eine Umgebungstemperatur, und
- eine Steuer- und Recheneinheit, die mit den Temperatursensoren verbunden ist, wobei die Steuer- und Recheneinheit ausgestaltet ist, die Batterietemperatur über den einstellbaren Parameter und über das Betreiben der aktiven Kühleinrichtung zu regeln.

Die Erfindung sieht zum einen vor, die Temperatur der Batterie anstelle der Kühlmitteltemperatur als Regelgröße heranzuziehen. Der Kühlmittelkreis der Batterie ist dabei mit einer Kühleinrichtung und vorzugsweise auch mit einer Heizeinrichtung thermisch gekoppelt, und Kühleinrichtung und ggf. Heizeinrichtung sind mit einer Regelung für ihren Betrieb versehen, die insbesondere Bestandteil eines BTMS sind. Mit einem Temperatursensor in der Nähe der Batterie, d.h. in ausreichender Nähe der Batteriezellen, wird die Batterietemperatur gemessen. Die Batterietemperatur wird als Regelgröße für den Betrieb der Kühleinrichtung und/oder der Heizeinrichtung verwendet.

Es können mehrere Temperatursensoren vorgesehen sein, so dass die Temperatur von Batteriezellen individuell gemessen werden kann. Dann kann das Heizen über die niedrigste oder einen Mittelwert mehrerer der niedrigsten Zelltemperaturen geregelt werden. Das Kühlen kann über die höchste oder einen Mittelwert mehrerer der höchsten Zelltemperaturen geregelt werden. Dies ermöglicht, die Batteriezelltemperaturen gezielt in einem optimalen Bereich zu halten. Es hat darüber hinaus den Vorteil, dass das BTMS einschließlich der Kühlmittelpumpe vollständig abgeschaltet bleiben kann, wenn kein Heiz- oder Kühlbedarf besteht, und so der Energiebedarf weiter reduziert werden kann.

Die Kopplung der aktiven und passiven Kühleinrichtungen mit dem Kühlmittelkreis kann in beliebiger Weise realisiert sein, beispielsweise mittels Wärmeübertrager oder in den Kühlmittelkreis der Batterie integriert.

Die Erfindung sieht alternativ oder zusätzlich vor, eine Batterie mithilfe eines Kühlmittelkreises zu kühlen, der mit einer passiven Kühleinrichtung und mit einer aktiven Kühleinrichtung derart gekoppelt ist, dass die passive Kühleinrichtung und die aktive Kühleinrichtung alternativ ein Kühlmittel in dem Kühlmittelkreis kühlen können.

Die passive Kühleinrichtung umfasst eine Vorrichtung zum Ändern der Kühlleistung der passiven Kühleinrichtung über einen einstellbaren Parameter, im Folgenden als Einstellmittel bezeichnet. Es werden eine Batterietemperatur, eine Kühlmittel-temperatur und eine Umgebungstemperatur als aktuelle Betriebsbedingungen erfasst. Es werden eine erste Energieeffizienz der passiven Kühleinrichtung bei einem ersten Parameterwert des Einstellmittels bei den aktuellen Betriebsbedingungen (Kühlmitteltemperatur, Umgebungstemperatur und/oder Batterietemperatur) ermittelt. Mit anderen Worten, es wird die Energieeffizienz bei den aktuell vorliegenden Werten beispielsweise der Batterietemperatur, der Kühlmitteltemperatur und/oder der Umgebungstemperatur beispielsweise anhand eines Kennlinienfeldes ermittelt, dieser Wert stellt die erste Energieeffizienz der passiven Kühleinrichtung bei einem ersten Parameterwert bei den aktuellen Betriebsbedingungen dar.

Die erste Energieeffizienz der passiven Kühleinrichtung wird dann mit einem Schwellwert verglichen, und wenn die erste Energieeffizienz der passiven Kühleinrichtung größer als der Schwellwert ist, wird die passive Kühleinrichtung mit dem ersten Parameterwert betrieben. Das Kühlmittel wird also mittels der passiven Kühleinrichtung gekühlt, wobei das Einstellmittel mit dem ersten Parameterwert betrieben wird.

Die Batterietemperatur wird weiter erfasst, und bei Erreichen einer Grenztemperatur wird die aktive Kühleinrichtung betrieben. Diese Grenz-Batterietemperatur ist größer oder gleich der ersten Batterietemperatur und wird auch als letzter Schaltpunkt bezeichnet.

Das Ermitteln der Energieeffizienzen mit nachfolgendem Vergleichen erfolgt vorzugsweise bei Erreichen einer ersten Batterietemperatur S1, die auch als erster Schaltpunkt bezeichnet wird. Alternativ oder zusätzlich können diese Schritte in bestimmten Zeitintervallen oder bei Änderung einer Betriebsbedingung erfolgen.

Das Einstellmittel ist vorzugsweise ein Lüfter. Der einstellbare Parameter ist dann vorzugsweise eine Lüfterdrehzahl. Alternativ oder zusätzlich kann das Einstellmittel eine Kühlmittelpumpe sein. Der einstellbare Parameter ist dann vorzugsweise eine Pumpendrehzahl.

In einem Ausführungsbeispiel umfasst demnach die passive Kühleinrichtung einen Lüfter mit einer einstellbaren Lüfterdrehzahl. Es werden eine Batterietemperatur, eine Kühlmitteltemperatur und eine Umgebungstemperatur als aktuelle Betriebsbedingungen erfasst. Es werden eine erste Energieeffizienz der passiven Kühleinrichtung bei einer ersten Lüfterdrehzahl bei den aktuellen Betriebsbedingungen (insbesondere Kühlmittel-temperatur, Umgebungstemperatur) ermittelt. Mit anderen Worten, es wird die Energieeffizienz der passiven Kühleinrichtung bei einer ersten Lüfterdrehzahl beispielsweise anhand eines Kennlinienfeldes bei den aktuell vorliegenden Werten der Betriebsbedingungen ermittelt, dieser Wert stellt die erste Energieeffizienz der passiven Kühleinrichtung bei einer ersten Lüfterdrehzahl bei den aktuellen Betriebsbedingungen dar.

Die erste Energieeffizienz der passiven Kühleinrichtung wird dann mit dem Schwellwert verglichen, und wenn die erste Energieeffizienz der passiven Kühleinrichtung größer als der Schwellwert ist, wird die passive Kühleinrichtung mit der ersten Lüfterdrehzahl betrieben. Das Kühlmittel wird also mittels der passiven Kühleinrichtung gekühlt, wobei der Lüfter mit der ersten Lüfterdrehzahl betrieben wird.

Die Batterietemperatur wird weiter erfasst, und bei Erreichen der Grenztemperatur wird die aktive Kühleinrichtung betrieben.

Wird als Einstellmittel eine Kühlmittelpumpe und als einstellbarer Parameter deren Drehzahl verwendet, gilt Entsprechendes. Es können auch mehrere Einstellmittel kombiniert werden. Die Energieeffizienz kann dann mehrdimensional bestimmt und optimiert werden.

Auf diese Weise ist sichergestellt, dass die Batterietemperatur in einem optimalen Bereich gehalten wird und gleichzeitig die Batterie mit einem möglichst energieeffizienten Verfahren gekühlt wird.

Für den Vergleich der Energieeffizienz kann ein Schwellwert gewählt werden, der abhängig von den aktuellen Betriebsbedingungen ist. Es ist insbesondere bevorzugt, dass eine Energieeffizienz der aktiven Kühleinrichtung als Schwellwert verwendet wird. Mit anderen Worten, es wird eine Energieeffizienz der aktiven Kühlung bei den aktuellen Betriebsbedingungen ermittelt und als Schwellwert verwendet. Das hat zur Folge, dass die passive Kühleinrichtung mit dem ersten Wert des einstellbaren Parameters nur betrieben wird, wenn sie energieeffizienter als die aktive Kühlung ist. Wenn die erste Energieeffizienz der passiven Kühleinrichtung bei dem ersten Parameterwert und den aktuellen Betriebsbedingungen niedriger ist als die Energieeffizienz der aktiven Kühleinrichtung bei diesen Betriebsbedingungen, wird der bisherige Parameterwert beibehalten. Beispielsweise kann die bisherige Lüfterdrehzahl gleich Null sein, d.h. der Lüfter wird dann nicht oder mit einer niedrigeren Drehzahl betrieben, nämlich mit der Lüfterdrehzahl, die einer Batterietemperatur unterhalb der ersten Batterietemperatur zugeordnet ist.

Als Lüfter kann ein einzelner Lüfter eingesetzt werden oder mehrere Lüfter, die einen gemeinsamen Luftstrom oder getrennte Luftströme zur Beaufschlagung des passiven Kühlers und des Kondensators der Kältemaschine erzeugen.

Für die Ermittlung der Energieeffizienz wird vorzugsweise die Leistungszahl verwendet. Als Leistungszahl LZ wird das Verhältnis der Kühlleistung zur elektrischen Aufnahmeleistung der Kühleinrichtung bezeichnet, wobei statt letzterem auch die elektrische Aufnahmeleistung des BTMS herangezogen werden kann:

$$ LZ = \frac{K\ddot{u}hlleistung}{El.\ Aufnahmeleistung} $$

Im Fall eines Lüfters als Einstellmittel hängt die Leistungszahl der passiven Kühleinrichtung in erster Linie von der Lüfterdrehzahl ab sowie von der Umgebungstemperatur und der Kühlmitteltemperatur, insbesondere von der sogenannten treibenden Temperaturdifferenz zwischen angesaugter Umgebungsluft und Kühlmittel. Beide Einflussfaktoren sind während des Betriebes messtechnisch erfassbar. Dadurch kann die Leistungszahl und damit die Energieeffizienz der passiven Kühleinrichtung beliebig im Betrieb, beispielsweise kontinuierlich, ermittelt werden.

Die Leistungszahl der aktiven Kühleinrichtung ist vorrangig ebenfalls von der Temperatur der angesaugten Umgebungsluft und der Kühlmitteltemperatur abhängig. Damit kann auch diese Leistungszahl und damit die Energieeffizienz der aktiven Kühleinrichtung beliebig im Betrieb, beispielsweise kontinuierlich, ermittelt werden.

Bei einem anderen Einstellmittel kann dessen Leistungszahl ebenfalls bestimmt werden, in der Regel hat dabei der einstellbare Parameter einen wesentlichen Einfluss. Beispielsweise ist bei einer Pumpe ebenfalls die Drehzahl eine entscheidende Größe für die Leistungszahl.

Vorzugsweise ist die Grenz-Batterietemperatur höher als die erste Batterietemperatur. Das bedeutet, dass im Betrieb der Batterie mit steigender Batterietemperatur zuerst die erste Batterietemperatur erreicht wird (sogenannter erster Schaltpunkt), bei der geprüft wird, ob die passive Kühleinrichtung bei Einstellung eines ersten Parameterwerts energieeffizienter arbeitet als die aktive Kühleinrichtung. Ist dies der Fall, wird die die passive Kühleinrichtung mit dem ersten Parameterwert betrieben. Wenn die Batterietemperatur im Betrieb weiter steigt, kann ggf. die Grenz-Batterietemperatur erreicht werden, und es wird die aktive Kühleinrichtung betrieben, dies geschieht insbesondere durch Einschalten eines Kältemittelverdichters im Kältemittelkreis der aktiven Kühleinrichtung.

Vorzugweise sind mehrere Schaltpunkte (bezeichnet als S1, S2 etc.) vorgesehen, d.h. Werte der Batterietemperatur, bei denen die Energieeffizienz der passiven Kühleinrichtung mit jeweiligen Schwellwerten verglichen werden, wobei jeweils unterschiedliche Werte des einstellbaren Parameters für die Ermittlung der Energieeffizienz der passiven Kühleinrichtung zugrunde gelegt werden. Dabei ist einem Schaltpunkt, dem eine höhere Batterietemperatur zugeordnet ist, in vielen Fällen auch ein höherer Wert des einstellbare Parameters (beispielsweise der Drehzahl) zugeordnet. Die Schwellwerte können dabei unterschiedlich sein, insbesondere können sie von den jeweiligen aktuellen Betriebsbedingungen abhängen. Vorzugsweise werden als jeweilige Schwellwerte die Energieeffizienz der aktiven Kühleinrichtung bei den aktuellen Betriebsbedingungen verwendet. Mit anderen Worten wird bei Erreichen einer zweiten Batterietemperatur (also einem zweiten Schaltpunkt), die höher ist als die erste Batterietemperatur, die Energieeffizienz der passiven Kühleinrichtung bei einem zweiten Wert des einstellbaren Parameters (bezeichnet als zweite Energieeffizienz der passiven Kühleinrichtung) ermittelt. Bei diesem zweiten Wert arbeitet die passive Kühleinrichtung in der Regel weniger energieeffizient als bei dem ersten Wert, beispielsweise bei niedriger Lüfterdrehzahl. Es wird auch die Energieeffizienz der aktiven Kühleinrichtung bei den aktuellen Betriebsbedingungen ermittelt und mit der zweiten Energieeffizienz der passiven Kühleinrichtung verglichen. Wenn letztere größer ist als erstere, wird die passive Kühleinrichtung mit dem zweiten Parameterwert betrieben.

Besonders vorteilhaft ist es, die Schaltpunkte mit einer Hysterese auszustatten. Dadurch wird ein zu häufiger Wechsel zwischen zwei Betriebsarten vermieden, wenn sie ein Messwert im Umschaltbereich befindet.

Wenn die Grenz-Batterietemperatur erreicht wird und die aktive Kühleinrichtung betrieben wird, kann die passiven Kühleinrichtung abgeschaltet werden, beispielsweise kann der Lüfter abgeschaltet werden. Sie kann aber auch weiter betrieben werden, wenn die Energieeffizienz bei der kombinierten Kühlung (also einer gleichzeitigen passiven und aktiven Kühlung) größer ist als die der aktiven Kühlung allein. Dabei wird der einstellbare Parameter, beispielsweise die Lüfterdrehzahl so eingestellt, dass die für die kombinierte Kühlung ermittelte Energieeffizienz möglichst groß ist.

Alternativ oder zusätzlich ist vorgesehen, in vorgebbaren zeitlichen Abständen und/oder bei vorgebbaren Änderungen von Betriebsbedingungen (insbesondere der Umgebungstemperatur) einen Vergleich der Energieeffizienz von passiver und aktiver Kühlung durchzuführen.

In einer Variante werden in den Vergleich der Energieeffizienzen mehrere Werte des einstellbaren Parameters einbezogen. Wenn beispielsweise die Batterietemperatur beim zweiten Schaltpunkt S2 liegt, werden die Energieeffizienz der passiven Kühleinrichtung für die zweite Lüfterdrehzahl und für die erste Lüfterdrehzahl sowie die Energieeffizienz der aktiven Kühleinrichtung ermittelt.

Von den Lüfterdrehzahlen, deren Energieeffizienz über der Energieeffizienz der aktiven Kühleinrichtung liegt, wird vorzugsweise diejenige mit der höheren Drehzahl ausgewählt, da diese die höhere Kühlleistung hat. Liegt keine Energieeffizienz der passiven Kühlung über der Energieeffizienz der aktiven Kühleinrichtung, wird die Lüfterdrehzahl Null eingestellt.

Diese Variante kann auch durchgeführt werden, wenn die Batterietemperatur zwischen zwei Schaltpunkten liegt und das Vergleichen zeitgesteuert oder ausgelöst durch eine Änderung von Betriebsbedingungen erfolgt. Wenn beispielsweise die Batterietemperatur zwischen S2 und SG liegt, werden die Energieeffizienz der passiven Kühleinrichtung für die zweite Lüfterdrehzahl und für die erste Lüfterdrehzahl sowie die Energieeffizienz der aktiven Kühleinrichtung ermittelt. Von den Lüfterdrehzahlen, deren Energieeffizienz über der Energieeffizienz der aktiven Kühleinrichtung liegt, wird dann diejenige mit der höheren Drehzahl ausgewählt. Liegt keine Energieeffizienz der passiven Kühlung über der Energieeffizienz der aktiven Kühleinrichtung, wird die Lüfterdrehzahl Null eingestellt. Das ist sinnvoll, weil sich die Betriebsparameter, insbesondere die Umgebungstemperatur, und dadurch die Effizienz der passiven Kühlung schnell ändern können.

Die erste Batterietemperatur, die Grenz-Batterietemperatur und ggf. die weiteren Schaltpunkte können fest vorgegeben sein oder während des Betriebs, d.h. abhängig von der Betriebssituation und insbesondere der Energieversorgungssituation, verändert werden. Da die Wahl der Schaltpunkte einen Einfluss auf die benötigte Energie hat, ist es vorteilhaft zu berücksichtigen, wieviel Energie in der jeweiligen Betriebssituation zu Verfügung steht, dies gilt insbesondere bei einer Traktionsbatterie in einem Schienenfahrzeug.

Wenn die Schaltpunkte niedrig gewählt werden, befindet sich die Batterietemperatur in einem für die Lebensdauer optimalen Bereich, allerdings muss für die Kühlung dann tendenziell mehr Energie aufgebracht werden. Beispielsweise wird in vielen Situationen die aktive Kühleinrichtung betrieben. Umgekehrt bewirken höhere Schaltpunkte einen niedrigeren Energiebedarf für die Kühlung, da in einem größeren Temperaturbereich die passive Kühleinrichtung betrieben wird. Es ist daher vorteilhaft, in einer Betriebssituation mit gewährleisteter Energieversorgung die Schaltpunkte bei niedrigeren Temperaturen zu setzen als bei einer Betriebssituation mit schlechter Energieversorgung, beispielsweise fehlender externer Energieversorgung.

Die folgenden vier Betriebssituationen können beispielsweise unterschieden werden:

1. Schnellladung der Batterie: Dabei entsteht eine hohe Verlustleistung der Batterie in Form von Abwärme, so dass eine sehr hohe Kühlleistung notwendig ist. In diesem Fall werden die Schaltpunkte so niedrig gesetzt, dass das aktive Kühlen ggf. unterstützt von der passiven Kühlung schon bei relativ niedriger Temperatur eingeschaltet wird. Es ist auch möglich, die Schaltpunkte auf denselben Wert zu setzen, d.h. die erste Batterietemperatur und die Grenz-Batterietemperatur haben denselben Wert von beispielsweise 25° C.

2. Eine externe Energieversorgung vorhanden: Die Batterie bezieht eine ausreichende Ladeleistung (in einem Schienenfahrzeug beispielsweise über einen Fahrdraht oder eine andere Fremdeinspeisung), beispielsweise derart, dass der Betrieb der BTMS dadurch gedeckt werden kann. Die Schaltpunkte werden so gesetzt, dass sich die Batteriezelltemperaturen in einem für die Lebensdauer optimalen Bereich befinden. In diesem Fall verkürzt der Betrieb der BTMS die Reichweite eines Fahrzeuges nicht.

3. Eine externe Energieversorgung vorhanden: In diesem Fall werden die Schaltpunkte leicht erhöht, so dass sich ein Kompromiss zwischen Erhalt der Batterielebensdauer und der Fahrzeugreichweite ergibt. Im Fall eines Schienenfahrzeugs fährt das Fahrzeug unter Batteriebetrieb, ggf. unterstützt von einer Brennstoffzelle.

4. Eine externe Energieversorgung vorhanden und niedriger Batterieladezustand (Notbetrieb / Energiesparmodus): Bei einer Traktionsbatterie eines Schienenfahrzeugs bedeutet dies, dass die Gefahr besteht, dass das Fahrtziel nicht mehr erreicht wird. In diesem Fall werden die Schaltpunkte weiter erhöht. Die Kühlung durch das BTMS erfolgt ggf. nur noch durch passives Kühlen mit niedriger Lüfterdrehzahl und somit mit sehr niedrigem Energiebedarf.

Eine von der Betriebssituation und insbesondere der Energieversorgungssituation abhängige Wahl der Grenz-Batterietemperatur nach der vorstehenden Beschreibung ist auch dann vorteilhaft, wenn auf eine Ermittlung der Energieeffizienz von passiver und aktiver Kühlung und deren Vergleich verzichtet wird. Es wird dadurch die zur Verfügung stehende Energie optimal ausgenutzt und bei einer Traktionsbatterie eine größere Reichweite erzielt. Bei einem solchen Verfahren wird die Batterietemperatur erfasst und die passive Kühleinrichtung betrieben, wenn die Batterietemperatur unterhalb der Grenz-Batterietemperatur ist. Die aktive Kühleinrichtung wird betrieben, wenn die Batterietemperatur oberhalb der Grenz-Batterietemperatur ist. Die Grenz-Batterietemperatur ist dabei von der Betriebssituation und insbesondere der Energieversorgungssituation abhängig, insbesondere können die oben beschriebenen Kriterien angewendet werden.

Die Erfindung wird im Folgenden anhand von Ausführungsbeispielen näher erläutert. Es zeigen in schematischer Darstellung

Fig.1 ein Ausführungsbeispiel einer Anlagenkonfiguration für eine Batteriekühlung mit einer aktiven Kühleinrichtung und einer passiven Kühleinrichtung,

Fig.2 ein Drehzahl-Batterietemperatur-Diagramm, und

Fig.3 ein Ablaufdiagramm eines Ausführungsbeispiels zur Verdeutlichung des erfindungsgemäßen Verfahrens.

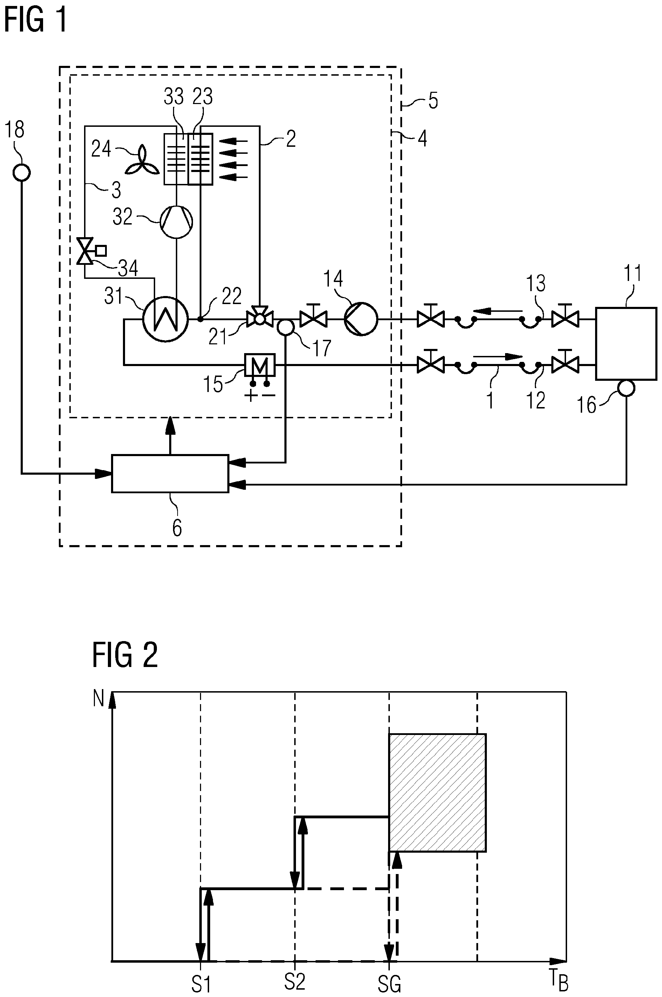

Fig.1 zeigt eine in einem Schienenfahrzeug realisierte Anlagenkonfiguration zur Temperierung einer Traktionsbatterie 11 mit einem Kühlmittelkreis 1, einer passiven Kühleinrichtung 2 und einer aktiven Kühleinrichtung 3. Die passive Kühleinrichtung 2, die aktive Kühleinrichtung 3 und der Kühlmittelkreis 1 sind Bestandteile einer Temperierungsvorrichtung 4, die wiederum Bestandteil eines BTMS (Battery Thermal Management System) 5 ist. Die Batterie 11 ist über einen Vorlauf 12 und einen Rücklauf 13 an den Kühlmittelkreis 1 angeschlossen. Der Kühlmittelkreis 1 umfasst eine Kühlmittelpumpe 14 und ein Heizmodul 15 als Heizeinrichtung. Die Batterietemperatur wird mittels eines Sensors 16 gemessen und an das BTMS weitergeleitet. Dabei kann der Sensor 16 so ausgebildet sein, dass die Temperaturen von einzelnen Batteriezellen separat gemessen werden.

Die passive Kühleinrichtung 2 ist über ein 3-Wege-Ventil 21 und eine weitere Verbindung 22 mit dem Kühlmittelkreis 1 gekoppelt und umfasst einen Kühler 23, der mit Umgebungsluft gekühlt wird. Diese passive Kühlung kann durch einen Lüfter als Einstellmittel 24 unterstützt werden, es kann aber auch bei ausgeschaltetem Lüfter mit Umgebungsluft und ggf. Fahrtwind gekühlt werden.

Die aktive Kühleinrichtung 3 ist ein üblicher Kältemittelkreislauf und ist über einen Verdampfer 31 als Wärmetauscher mit dem Kühlmittelkreis 1 gekoppelt. Ferner umfasst der Kältekreislauf der aktiven Kühleinrichtung einen steuerbaren Kältemittelverdichter 32, einen Kondensator 33 und ein als Expansionsorgan dienendes steuerbares Expansionsventil 34.

Es sind weiter ein Temperatursensor 17 für die Kühlmitteltemperatur und ein Temperatursensor 18 für die Umgebungstemperatur vorgesehen. Der Temperatursensor 17 ist bevorzugt im Kühlmittelkreis 1 der Batterie 11 angeordnet.

Das BTMS 5 umfasst ferner eine Steuer- und Recheneinheit 6. Diese empfängt Daten von den Temperatursensoren 16, 17 und 18, sowie weitere Daten zu dem aktuellen Betriebszustand und die aktuelle Betriebssituation, insbesondere, ob eine externe Energieversorgung vorhanden ist. Die Steuer- und Recheneinheit 6 wählt die Schaltpunkte abhängig von der aktuellen Betriebssituation und steuert den Verfahrensablauf, durch den die Batterietemperatur geregelt wird.

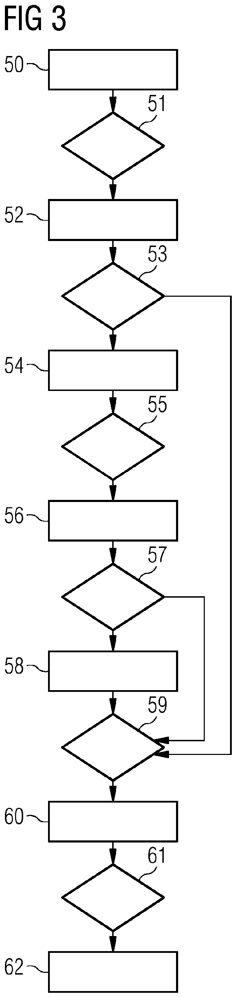

Fig. 2 verdeutlicht ein Ausführungsbeispiel des Verfahrens anhand eines Drehzahl/Batterietemperatur-Diagramms, Fig. 3 zeigt die Verfahrensschritte als Ablaufdiagramm. Als Betriebssituation ist ein normaler Fahrbetrieb angenommen, bei dem eine externe Versorgung zur Verfügung steht.

Beim Betriebsstart liegt die Batterietemperatur, die mit dem Sensor 16 gemessen wird, unter der ersten Batterietemperatur/Schaltpunkt S1. Die passive Kühlrichtung 2 wird mit abgeschaltetem Lüfter betrieben, d.h. die Lüfterdrehzahl N als Wert des einstellbaren Parameters beträgt Null. Gegebenenfalls kann auch die Kühlmittelpumpe 14 abgeschaltet sein. Die Batterietemperatur TB, die Umgebungstemperatur und die Kühlmitteltemperatur (in der passiven Kühleinrichtung in der Nähe des Kühlers) werden mit den Sensoren 16, 18, 17 laufend gemessen (Schritt 50).

Im Laufe des Betriebs erwärmt sich die Batterie. Wenn die erste Batterietemperatur S1 (erster Schaltpunkt) erreicht ist (Schritt 51), wird anhand der Messwerte von Umgebungstemperatur und Kühlmitteltemperatur die Leistungszahl für die passive Kühleinrichtung und einen Lüfterbetrieb mit einer ersten Drehzahl als erste Leistungszahl bestimmt, d.h. es wird die erste Energieeffizienz für die passive Kühleinrichtung bei den aktuellen Betriebsbedingungen ermittelt (Schritt 52). Die erste Leistungszahl kann beispielsweise einem Kennlinienfeld der passiven Kühleinrichtung 2 entnommen werden. Alternativ kann sie berechnet werden. Ferner wird in Schritt 52 die Leistungszahl (Energieeffizienz) der aktiven Kühleinrichtung 3 bei den aktuellen Betriebsbedingungen (Kühlmitteltemperatur, Umgebungstemperatur) ermittelt. Die beiden Leistungszahlen werden verglichen (Schritt 53). Wenn die erste Leistungszahl für die passive Kühlung größer ist als die Leistungszahl für die aktive Kühlung, wird die erste Lüfterdrehzahl eingestellt (Schritt 54). Wenn, beispielsweise aufgrund einer niedrigen treibenden Temperaturdifferenz, die erste Leistungszahl für die passive Kühlung niedriger ist als die Leistungszahl für die aktive Kühlung, ist das passive Kühlen nicht energieeffizient, und der Lüfter wird nicht mit der ersten Lüfterdrehzahl betrieben, sondern mit der bisherigen, hier also Null. In diesem Fall steigt die Batterietemperatur weiter an, ggf. bis die Grenztemperatur SG erreicht ist (Schritt 59), bei der die aktive Kühleinrichtung betrieben wird. Dies ist in Fig. 2 durch die waagerechte gestrichelte Linie mit der Lüfterdrehzahl Null dargestellt. Es kann aber auch bei Erreichen der zweiten Batterietemperatur wieder ein Vergleich der Leistungszahlen von passiver Kühlung bei der zweiten Lüfterdrehzahl und aktiver Kühlung durchgeführt werden, was in der Fig. 2 und Fig. 3 nicht dargestellt ist. Dies ist sinnvoll, da sich die die Leistungszahl bestimmenden Parameter geändert haben können, beispielsweise die Umgebungstemperatur.

Wenn die erste Lüfterdrehzahl in Schritt 54 eingestellt wurde und die Batterietemperatur weiter steigt, wird in Schritt 55 geprüft, ob die zweite Batterietemperatur S2 (zweiter Schaltpunkt) erreicht ist. Ist dies der Fall, wird die zweite Energieeffizienz für die passive Kühleinrichtung bei den aktuellen Betriebsbedingungen bei Annahme einer zweiten Lüfterdrehzahl ermittelt (Schritt 56). Ferner wird die Leistungszahl bzw. Energieeffizienz der aktiven Kühleinrichtung bei den aktuellen Betriebsbedingungen ermittelt. Es werden die beiden Leistungszahlen verglichen (Schritt 57). Wenn die zweite Leistungszahl für die passive Kühlung größer ist als die Leistungszahl für die aktive Kühlung, wird die zweite Lüfterdrehzahl eingestellt (Schritt 58). Wenn die zweite Leistungszahl für die passive Kühleinrichtung niedriger ist als die Leistungszahl für die aktive Kühleinrichtung, ist das passive Kühlen mit der zweiten Lüfterdrehzahl nicht energieeffizient, und der Lüfter wird mit der bisherigen (ersten) Lüfterdrehzahl weiter betrieben. Wenn in diesem Fall die Batterietemperatur weiter ansteigt (waagerechte gestrichelte Linie bei der ersten Lüfterdrehzahl in Fig. 2), wird geprüft, ob die Grenztemperatur SG erreicht ist (Schritt 59). Wenn diese erreicht ist, wird die aktive Kühleinrichtung eingeschaltet.

Es können weitere Schaltpunkte vorgesehen sein, bei dem die zum zweiten Schaltpunkt erläuterten Verfahrensschritte analog durchgeführt werden. Mit anderen Worten, anstelle der in Fig. 2 gezeigten vier Stufen für das passive Kühlen können auch mehr oder weniger Stufen definiert werden.

Wenn die Batterietemperatur die Grenz-Batterietemperatur SG erreicht (Schritt 59), wird die aktive Kühleinrichtung eingeschaltet (Schritt 60). Es kann anschließend weiter ermittelt werden, ob bei den aktuellen Betriebsbedingungen die Energieeffizienz steigt oder zumindest nicht sinkt, wenn die passive Kühleinrichtung weiter in Betrieb bleibt, wobei dies für unterschiedliche Lüfterdrehzahlen ermittelt werden kann (Schritt 61). Es wird bei einer Batterietemperatur oberhalb der Grenz-Batterietemperatur SG somit die Energieeffizienz einer Kombination der passiven Kühleinrichtung bei einer Lüfterdrehzahl und der aktiven Kühleinrichtung bei den aktuellen Betriebsbedingungen bestimmt. Wenn die Energieeffizienz einer solchen Kombination größer ist als die Energieeffizienz der aktiven Kühleinrichtung allein, werden die passive und die aktive Kühleinrichtung gleichzeitig betrieben. Dabei wird eine Lüfterdrehzahl eingestellt, bei der die Energieeffizienz des kombinierten Kühlens am größten ist (Schritt 62). Dies ist in der Fig. 2 durch den schraffierten Bereich symbolisiert, der sich jenseits der Grenz-Batterietemperatur SG und über unterschiedliche Lüfterdrehzahlen erstreckt.

Wenn im weiteren Verlauf die Batterietemperatur sinkt, beispielsweise aufgrund einer sinkenden Umgebungstemperatur und/oder geringeren Leistung der Batterie, wird das beschriebene Verfahren analog durchgeführt. Bei Erreichen eines Schaltpunkts wird jeweils die Leistungszahl der passiven Kühlung bei einer niedrigeren Lüfterzahl mit der Leistungszahl der aktiven Kühlung verglichen. Wenn beispielsweise die Batterietemperatur unter die zweite Batterietemperatur sinkt, wird geprüft, ob die passive Kühlung bei der ersten Lüfterdrehzahl energieeffizienter ist, als die aktive Kühlung bei den vorliegenden Betriebsbedingungen.

Die in den Ausführungsbeispielen beschriebenen Merkmale und Aspekte der Erfindung können selbstverständlich miteinander in unterschiedlicher Weise kombiniert werden. Insbesondere können die Merkmale nicht nur in den beschriebenen Kombinationen, sondern auch in anderen Kombinationen oder für sich genommen verwendet werden.

**Patentansprüche**

1. Verfahren zum Temperieren einer Batterie (11) mithilfe eines Kühlmittelkreises (1), der mit einer passiven Kühleinrichtung (2) und mit einer aktiven Kühleinrichtung (3) derart gekoppelt ist, dass ein Kühlmittel in dem Kühlmittelkreis (1) mittels der passiven Kühleinrichtung (2) und/oder der aktiven Kühleinrichtung (3) kühlbar ist,

   wobei die passive Kühleinrichtung (2) ein Einstellmittel (24) zum Ändern der Kühlleistung über einen einstellbaren Parameter umfasst, mit folgenden Schritten:

   - Erfassen von aktuellen Betriebsbedingungen, insbesondere einer Batterietemperatur, einer Kühlmitteltemperatur und einer Umgebungstemperatur,
   - bei Erreichen einer ersten Batterietemperatur (S1)

   i. Ermitteln einer ersten Energieeffizienz der passiven Kühleinrichtung (2) bei einem ersten Parameterwert des einstellbaren Parameters bei den aktuellen Betriebsbedingungen,
   ii. Vergleichen der ersten Energieeffizienz der passiven Kühleinrichtung (2) mit einem Schwellwert,
   iii. wenn die erste Energieeffizienz der passiven Kühleinrichtung (2) größer ist als der Schwellwert, Betreiben der passiven Kühleinrichtung (2) mit dem ersten Parameterwert,

   - bei Erreichen einer Grenz-Batterietemperatur (SG), die höher ist als die erste Batterietemperatur (S1), Betreiben der aktiven Kühleinrichtung (3).

2. Verfahren nach dem vorhergehenden Anspruch, **dadurch gekennzeichnet, dass** die Schritte i. - iii. in bestimmten Zeitabständen und/oder bei Änderung der Betriebsbedingungen durchgeführt werden.

3. Verfahren nach einem der vorhergehenden Ansprüche, **dadurch gekennzeichnet, dass** das Einstellmittel (24) einen Lüfter mit einer einstellbaren Drehzahl und/oder eine Kühlmittelpumpe mit einer einstellbaren Drehzahl umfasst.

4. Verfahren nach einem der vorherigen Ansprüche, **dadurch gekennzeichnet, dass** der Schwellwert abhängig von den aktuellen Betriebsbedingungen gewählt wird.

5. Verfahren nach einem der vorherigen Ansprüche, **dadurch gekennzeichnet, dass** eine Energieeffizienz der aktiven Kühleinrichtung (3) bei den aktuellen Betriebsbedingungen ermittelt wird und der Schwellwert abhängig von der Energieeffizienz der aktiven Kühleinrichtung (3) gewählt wird.

6. Verfahren nach einem der vorherigen Ansprüche, **dadurch gekennzeichnet, dass** wenn die erste Energieeffizienz der passiven Kühleinrichtung (2) bei dem ersten Parameterwert des einstellbaren Parameters kleiner ist als der Schwellwert, ein zuvor gewählter Parameterwert des einstellbaren Parameters beibehalten wird,.

7. Verfahren nach einem der vorherigen Ansprüche, **dadurch gekennzeichnet, dass** als Energieeffizienz eine Leistungszahl der Kühleinrichtung (2, 3) verwendet wird.

8. Verfahren nach einem der vorherigen Ansprüche, mit, bei Erreichen einer zweiten Batterietemperatur (S2), die höher ist als die erste Batterietemperatur (S1) und niedriger ist als die Grenz-Batterietemperatur (SG), den weiteren Schritten:

   - Ermitteln einer zweiten Energieeffizienz der passiven Kühleinrichtung (2) bei einem zweiten Parameterwert des einstellbaren Parameters bei den aktuellen Betriebsbedingungen,
   - Vergleichen der zweiten Energieeffizienz der passiven Kühleinrichtung (2) mit dem Schwellwert,
   - Betreiben der passiven Kühleinrichtung (2) mit dem zweiten Parameterwert, wenn die zweite Energieeffizienz der passiven Kühleinrichtung (2) größer ist als der Schwellwert.

9. Verfahren nach einem der vorherigen Ansprüche, **dadurch gekennzeichnet, dass** die Batterie (11) als Traktionsbatterie für ein Fahrzeug, insbesondere ein Schienenfahrzeug, verwendet wird.

10. Verfahren nach einem der vorherigen Ansprüche, **dadurch gekennzeichnet, dass** bei einer Batterietemperatur oberhalb der Grenz-Batterietemperatur (SG)

- die Energieeffizienz einer Kombination der passiven Kühleinrichtung (2) bei einem Wert des einstellbaren Parameters und der aktiven Kühleinrichtung (3) bei den aktuellen Betriebsbedingungen bestimmt wird, und
- die passive (2) und die aktive Kühleinrichtung (3) gleichzeitig betrieben werden, wenn die Energieeffizienz der Kombination größer ist als die Energieeffizienz der aktiven Kühleinrichtung (3).

11. Verfahren nach einem der vorherigen Ansprüche, **dadurch gekennzeichnet, dass** eine Betriebssituation des Fahrzeugs erfasst wird und die erste Batterietemperatur (S1), die Grenz-Batterietemperatur (SG) und insbesondere die zweite Batterietemperatur (S2) abhängig von der Betriebssituation des Fahrzeugs gewählt werden.

12. Verfahren nach Anspruch 11, **dadurch gekennzeichnet, dass** die Batterie (11) eine Traktionsbatterie eines Fahrzeugs ist und die Grenz-Batterietemperatur (SG) abhängig von einer eine Energieversorgungssituation beschreibenden Betriebssituation des Fahrzeugs gewählt wird.

13. Verfahren nach Anspruch 12, **dadurch gekennzeichnet, dass** bei einer Betriebssituation mit externer Energieversorgung des Fahrzeugs die erste Batterietemperatur (S1), die Grenz-Batterietemperatur (SG) und insbesondere die zweite Batterietemperatur (S2) niedriger gewählt werden als bei einer Betriebssituation ohne externe Energieversorgung des Fahrzeugs.

14. Verfahren nach Anspruch 12 oder 13, **dadurch gekennzeichnet, dass** bei einer Betriebssituation mit Schnellladung der Traktionsbatterie die erste Batterietemperatur (S1), die Grenz-Batterietemperatur (SG) und insbesondere die zweite Batterietemperatur (S2) gleich gewählt werden.

15. Verfahren nach einem der vorherigen Ansprüche, **dadurch gekennzeichnet, dass** die aktive und die passive Kühleinrichtung (3, 2) und/oder eine mit dem Kühlmittelkreis (1) thermisch gekoppelte Heizeinrichtung (15) mit einer Steuerung (6) für ihren Betrieb versehen sind, und die Batterietemperatur als Regelgröße für die Steuerung der Heizeinrichtung (15) und/oder der Kühleinrichtungen (2, 3) verwendet wird.

16. Vorrichtung, ausgestaltet zur Durchführung eines Verfahrens nach einem der Ansprüche 1 bis 15, wobei die Vorrichtung zumindest umfasst:

- einen Kühlmittelkreis (1) zum Temperieren einer Batterie (11), wobei der Kühlmittelkreis (1) mit einer passiven Kühleinrichtung (2) und mit einer aktiven Kühleinrichtung (3) derart gekoppelt ist, dass die passive Kühleinrichtung (2) und die aktive Kühleinrichtung (3) alternativ oder gemeinsam ein Kühlmittel in dem Kühlmittelkreis (1) kühlen können, wobei die passive Kühleinrichtung (2) ein Einstellmittel (24) zum Ändern der Kühlleistung der passiven Kühleinrichtung (2) über einen einstellbaren Parameter umfasst,
- Temperatursensoren (16, 17, 18) für eine Batterietemperatur, eine Kühlmitteltemperatur und eine Umgebungstemperatur, und
- eine Steuer- und Recheneinheit (6), die mit den Temperatursensoren (16, 17, 18) verbunden ist, wobei die Steuer- und Recheneinheit (6) ausgestaltet ist, die Batterietemperatur über den einstellbaren Parameter und über das Betreiben der aktiven Kühleinrichtung (3) zu regeln.

17. Fahrzeug, insbesondere Schienenfahrzeug, umfassend zumindest eine Traktionsbatterie und eine Vorrichtung nach Anspruch 16.

18. Verwendung einer Vorrichtung nach Anspruch 16 in einem Fahrzeug, insbesondere einem Schienenfahrzeug, mit zumindest einer Traktionsbatterie.

FIG 1

FIG 2

# FIG 3